# EUROPEAN PATENT APPLICATION

(11) **EP 0 780 211 A1**
(43) Date of publication of application: **25.06.1997**
(21) Application number: 96203500.2
(22) Date of filing: 10.12.1996
(51) Int. Cl.: B29C 63/04

(54) **Method and production line for producing panels covered with a top layer**

(30) Priority: 21.12.1995 BE 9501058
(71) Applicant: Vandenbosch, Erik, 3200 Aarschot (BE)
(72) Inventor: Vandenbosch, Erik, 3200 Aarschot (BE)
(74) Representative: Callewaert, Jean

(57) **Abstract**

Method and a production line for producing panels clad with a top layer (2), whereby this production line comprises comprising the following devices :
- a device (D2) for fastening fittings to a sheet;
- a magazine device (G3) for supplying a top layer fully automatically;
- a device (G1, G4) for applying an attachment layer to the sheet and/or top layer;
- a device for softening the top layer and a device (G5) for joining the top layer and the sheet with at least one fitting in a single movement.

## Description

The invention concerns a method for producing panels covered with a top layer, and a device for carrying out this method as described in the preamble to claim 1. These panels are produced by coating a sheet-shaped base, hereinafter referred to as "sheet", with a top layer and then providing this said sheet with the necessary fittings. In this way, by fitting various fittings with different profiles, a panel with a very complex form can be obtained.

According to the state of the art, a method is known in which a top layer is attached on a sheet by flat adhesive, where said top layer projects on both sides of the sheet. The sheet is then fitted with one or more fittings, after which the top layer is joined to said fittings.

The known method has the disadvantage that production of the panels which have a complex shape because several fittings with different shapes are applied to the same sheet, is expensive and laborious.

The main object of the invention is to do away with these disadvantages by offering a very simple method which makes it possible to provide a panel, consisting of a sheet and one or more fittings connected to it, with a preferably hard top layer.

To this end, according to the invention, a panel is produced according to a method as described in the characterising part of claim 1.

The invention also concerns a production line for carrying out a method according to the invention. Said production line is characterised by the fact that it comprises the following devices: a device for fastening the fittings to a sheet, where said fittings are supplied automatically; a device for fully automatic supply of a top layer from a storage device, where the supply of the top layer is synchronised with the supply of the sheet already fitted with at least one fitting; a device for applying an adhesive layer to the sheet and/or top layer; a device for softening the top layer to make it pliable; and a device for binding the top layer and the sheet fitted with one or more fittings in a continuous movement.

Other characteristics and advantages of the invention will be apparent from the following description of some embodiments of the known method and of the method and device according to the invention. The description of these particular embodiments are given by way of example only, and do not limit the scope of the invention or the protection claimed.

The reference numbers used below relate to the accompanying drawings.

Figs. 1 to 6 are schematic cross-sections showing the appearance of a panel during the various stages, when it is produced according to the above-mentioned known method, while figs. 7 to 13 are analogous schematic cross-sections of the sheet, possibly with fittings applied to it, illustrating the different successive operations according to the above-mentioned special embodiment of the method according to the invention.

Fig. 14 is a schematic diagram of a specific production line according to the invention, for applying the method according to the invention.

In these different figures the same reference numbers relate to the same or similar elements.

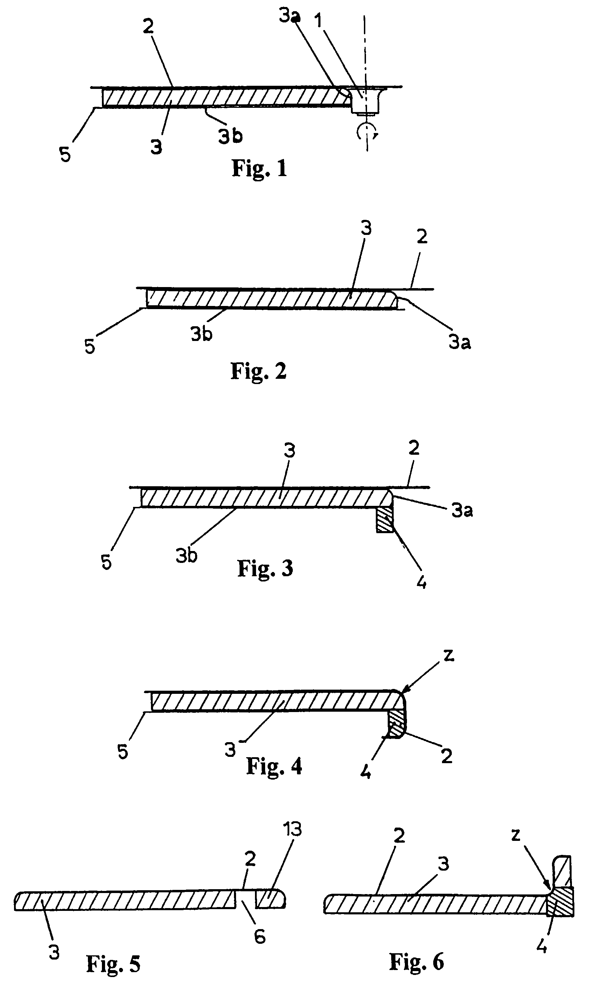

According to the present state of the art, a top layer 2, e.g. an HPL layer, is applied to a sheet 3 by means of a static flat press (not shown), such that said top layer projects to a wide extent beyond the side edges of said sheet, after which at least one edge 3a of said sheet 3 is profiled with a special milling machine 1. This operation is shown schematically in fig. 1.

By HPL layer is meant a known high-pressure laminate based on phenolic resin, where said laminate is possibly fitted with a top layer based on melamine. The sheet 3 can for example consist of chipboard or plywood.

According to another known state of the art, shown schematically in fig. 2, at least one of the edges 3a of a sheet 3 is fitted with a profile in advance, after which an HPL layer 2 is applied to the sheet 3 by a static flat press (not shown), such that said HPL layer 2 projects to a wide extent beyond the side edges.

From figs. 1 and 2 it can be seen that the first stage of the known process is flat adhesive joining of the HPL layer 2 onto the plate 3, where said HPL layer 2 projects at both sides of the sheet 3.

Fig. 3 shows schematically a following stage of the known method, in which a fitting 4 is attached to a sheet 3 which already has an HPL layer 2. Here, said HPL layer 2 is not yet joined to the fitting 4.

Fig. 4 shows how the projecting part of the HPL layer 2, as shown in fig. 3, is bent round the profiled edge 3a and the fitting 4 and joined to them. Said fitting 4 is also profiled in an analogous manner to the edge 3a of the sheet 3. The bending and joining can be carried out statically or continuously.

Figs. 5 and 6 are schematic diagrams of a variant of this known method, showing the production of a panel with a fill-up fitting 4. In a sheet 3 fitted with a top layer 2 and produced according to one of the methods described above, a slot 6 is milled, and the loose-hanging edge piece 13 is folded over and the slot 6 is filled up.

In all the known methods, the application of the top layer on the panels is carried out in a discontinuous manner, since the application of said top layer, e.g. an HPL layer, is carried out in different steps:
the first step is the flat adhesive-joining of the HPL layer onto a sheet which itself must be flat; the second step is the bending and adhesive-joining of the HPL layer against the more complex, profiled shape of the fill-up part or fitting 4, both steps being separated from each other by several intermediary steps. This makes the production of such panels laborious and expensive.

Furthermore, there is a higher risk of reduced quality, since adhesive-joining of a top layer in two stages carries the danger that the adhesive may join less well to the transition zone Z between the first flat adhesive-joined part of the layer and the second profiled part of the fitting, or that hardened traces of adhesive from the first operation may remain between them. It is also possible that the contact between the fill-up part or fitting 4 and the HPL layer may be less good, so that for example air inclusions may be formed in said transition zone.

The purpose of the present invention is to do away with the disadvantages of the above-mentioned known method. In particular, the purpose is to create a method and a production line for carrying out this method, which enable panels fitted with a top layer and one or more fittings to be made more cheaply and with constant quality.

In particular, the invention consists in providing said panels with a top layer according to a method which is carried out more or less continuously, in which manual intervention or buffering are no longer required, or are reduced to a strict minimum.

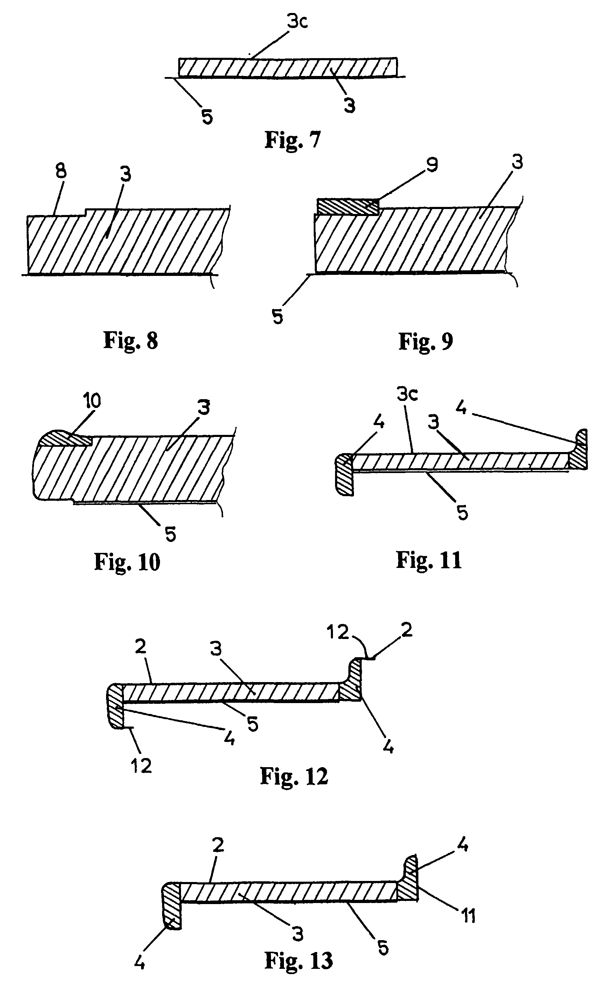

A possible preferred embodiment of the method according to the invention is as follows:
Step S1: Sheets 3 are placed on a continuously moving transport device (not shown) whose speed can be varied. This can be a conveyor belt whose speed can e.g. vary between 5 m/min and approximately 20 m/min.
Step S2: Fig. 7 shows how a sheet 3 is fitted on the underneath 3b with a backing film 5. For this purpose, the sheet 3 is provided with means of attachment, e.g. adhesive, after which lime is applied onto the sheet 3 and/or backing film 5, e.g. by means of rollers (not shown), and then said backing film 5 is adhesive-joined to said sheet S3 by means of pressure, e.g. by means of pressure rollers (not shown).
Step S3: Depending on the final dimensions to be achieved, the sheet 3 may possibly be sawn to the exact width. After this, one or more fittings 4 are attached to one or more sides of the sheet 3 as shown schematically in fig. 11. Said fittings 4 can be continuous strips.
   These operations are carried out in a combined machine (not shown) which can carry out all the operations. The fittings 4 are supplied fully automatically, so that manual intervention or buffering is no longer required.
Step S4: Finally, a top layer 2, e.g. an HPL layer as described above, is applied to the panel consisting of the sheet 3 and/or one or more fittings 4. For this purpose, sheet 3 and/or top layer 2 are provided with a means of attachment, e.g. adhesive, said means of attachment being applied on the projecting or rounded parts, e.g. by spraying.
   If adhesive is used, it is applied by e.g. an adhesive roller (not shown).
   The top layer 2 is supplied fully automatically, e.g. from a buffer position which can possibly be supplied from pallets (not shown).
   The means of attachment is then activated. If adhesive is used, this can be done by e.g. applying heat or applying chemical additives.
   The top layer 2 is then softened, e.g. by means of heating elements (not shown), and is then adhesive-joined in a single operation against the top side 3c of the sheet 3 with the fittings 4 fastened on it.
   The supply of the top layer 2 and of the sheet 3 with the fittings 4 attached on it are synchronised, after which the top layer 2 is pressed both against the sheet 3 and against the fittings 4 fastened on it, the pressure being applied by means of a pressure-creating device, e.g. pressure rollers (not shown), such that both the flat part of the sheet and the profiled parts are covered with a continuous top layer in a single continuous motion.
   Then the projecting parts 12 of the top layer, shown in fig. 12, are removed, e.g. by milling.
Step S5: Fig. 13 shows how the panel in step S4 is fitted with an edging strip 11. For this purpose a edge adhesive applicator device (not shown) is provided, with the necessary edging strips 11 being supplied fully automatically.
Step S6: The panels are given straight edges in a sawing installation (not shown), in which any unwanted excess dimensions are removed from the panels. Such an operation is known in itself, and is generally termed "straight edging". It is also possible to shorten the panels by means of this sawing installation.
Step S7: The panels are if necessary packed individually. This is done by means of shrink wrapping and accompanying protective sections, after which the packed panels are stacked fully automatically.

The panels that do not have to be packed individually are removed from the production line fully automatically after the above-mentioned step S6.

In step S3, a fitting in the form of a strip 9, e.g. a wood or plastic strip, may be fitted to the top side of the sheet 3 in order to obtain a water sealing edge 10. For this purpose a slot 8 is milled in the sheet 3 as shown schematically in fig. 8. A strip 9 is then fitted in the slot 8, e.g. by means of adhesive, as shown in fig. 9. The strips are delivered in roll form and supplied automatically. The strip 9 is then milled into the desired shape of the water sealing edge 10, as shown schematically in fig. 10. If necessary, the water sealing edge is then sanded smooth. This operation has to be carried out before the top layer 2 is applied, so that said top layer 2 can be applied in a single operation against the sheet 3, said water sealing edge 10 and the fittings 4 that are attached to the sheet.

Particularly noteworthy is the advantage of applying the method according to the invention for obtaining a panel with an upstanding edge, as shown in fig. 6.

The known, complex technique, which consists in first milling or sawing a slot 6, then precisely bending the loose-hanging longitudinal edge part 13 thus obtained through an angle of 90° upward and then applying a filler part 4 that fits in the open slot thus formed, is replaced by a single operation which consists in fitting an L-shaped fitting 4, as shown in fig. 9, against one of the edges of the sheet 3 by adhesive-joining.

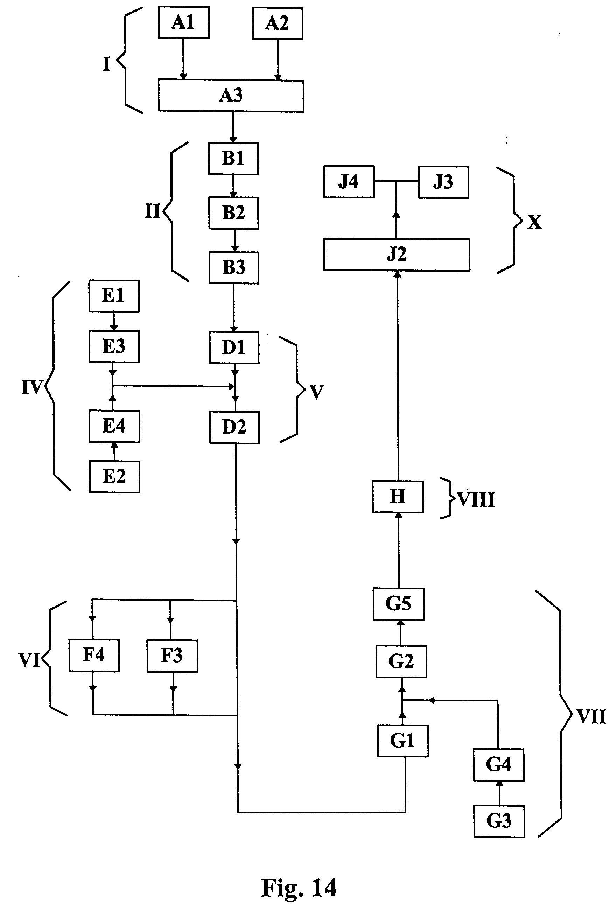

A particular embodiment of a production line for carrying out the method according to the invention, as described above, comprising a series of processing stations, is shown schematically by the block diagram in fig. 14.

A first processing station I comprises:
- a double magazine device A1, A2, which is loaded with sheets by a loading device, e.g. a forklift;
- an unstacking device A3;
- a transport device, e.g. a roller conveyor, on which the sheets are placed one by one by the above-mentioned unstacking device A3.

A second processing station II comprises:
- a device B1, in which the underneath of each sheet is brushed and has adhesive pre-applied to it;
- a device B2 in which several successive plates, preferably fitting more or less against each other, may possibly be provided with a continuous backing film;
- a cutting device B3 in which the successive plates are separated from each other once more by cutting said film between two sheets.

A sheet 3 provided with such a backing film 5 is shown schematically in fig. 7.

A third workstation (not shown) comprises:
- an intermediate transport device between the processing station II and the processing station V described below.

A fourth processing station IV comprises:
- a first device in the form of one or more lifting platforms E1, E2, on which the fittings 4 are stacked by means of a loading device, e.g. a forklift, in pallet form;
- a second device with one or more platforms E3, E4, onto each of which fittings 4 are slid one by one after another from the corresponding platforms E1, E2 of the first device;
- a first transport device, e.g. a double toothed chain, which receives the fittings 4 from the tables E3, E4;
- a second transport device, e.g. a double inclined toothed chain, which brings the fittings to the production line at an angle with respect to the processing station V described below and carries them to said processing station V;

A fifth processing station V comprises:
- a device D1 for possibly sawing the sheets to the exact width;
- a device D2, e.g. an adhesive joining device, in order to join the fittings 4 to the sheets 3, said fittings 4 being brought fully automatically from said above-mentioned processing station IV; a sheet 3 with fittings 4 is shown schematically in fig. 11;
- a device D3, e.g. a milling device, for making a slot 8 for the fitting in the form of a strip 9 in the top side of the sheet 3;
- a device D4, e.g. an adhesive joining device, for attaching said strip 9 in the slot 8;
- a device D5 for giving the strip 9 a profiled shape 10, e.g. by means of a milling machine. A sheet 3 with such a profiled strip is shown in cross-section in fig. 10.

A sixth processing station VI comprises:
- a third transport device;
- a buffer device F3, F4 which obtains the panels consisting of sheet 3 with fittings 4 attached, supplied by means of the above-mentioned transport device;
- a fourth transport device for supplying the panels to the following processing station.

A seventh processing station VII comprises:
- a device G1 for providing the panels with means of attachment. This can be a device for applying adhesive, e.g. by means of rollers and spray heads;
- a device G2 for activating said means of attachment, e.g. a heating device if adhesive is used as the means of attachment;
- a magazine device G3 for the top layer 2 to be applied;
- a device G4 for providing the top layer with a means of attachment, after said top layer has been taken out of the magazine device G3. This can be a device for applying adhesive, e.g. by means of rollers and spray heads;
- a device for activating the means of attachment and softening the top layer, e.g. heating device;
- an attachment device G5 for applying the top layer 2 to the sheet 3 with the fittings 4 in a continuous manner, so that said top layer 2 is in good contact with the sheet surface and the fittings 4 attached to the sheet. Such a connection, in particular using adhesive, can e.g. be formed under pressure by e.g. the use of pressure rollers.

An eighth processing station VIII comprises:
- a post-processing device H in which e.g. the excess dimension 12 of the top layer 2 is milled away.

A ninth processing station not shown in fig. 14 comprises:
- an intermediate transport device to ensure transport of the panels between the previous processing station VIII and the following one.

A tenth processing station X comprises:
- an output path;
- an unstacking device J2, and
- a magazine device J3, J4.

Although the individual parts of the production line according to the invention are mostly known in the furniture industry, this production line is distinguished and characterised by the order and the number of the parts: specifically, it is not necessary to have two different devices to attach a top layer to a sheet with fittings, e.g. by means of adhesive.

The production line according to the invention has one single device for attaching the top layer on the sheet with fittings, said device being located downstream of the processing station, where the fittings are attached to the sheet.

The devices and machines used in this production line are not shown in greater detail in the drawings, since they belong to machines and devices known to persons skilled in the art of making furniture or laminated sheets.

The invention is not limited to the embodiment described above and shown in the accompanying drawings, and several variants can be considered while remaining within the scope of the invention.

For instance, it is possible to have the following speeds for the conveyor belt: 7, 9, 11, 13, 15, 17 or 19 m/min. Clearly, the speeds mentioned in the description can vary by around 10 to 15%.

Clearly also, the steps 2, 5, 6 and 7 may or may not be present in the method according to the invention.

Furthermore, the sheet may consist of solid wood, or of all sorts of plastics that have not yet been mentioned, or of metals, e.g. light metal such as aluminium, etc. Apart from the HPL layer already mentioned, a metal can be chosen for the top layer, such as an aluminium foil, or a laminate consisting of a layer of plastic and a layer of metal, e.g. an aluminium-plastic laminate. Moreover, although one of the above-mentioned hard materials is preferably used as the top layer, it is also possible in some cases to use a flexible foil, so that heating the top layer is not necessary.

Also, the cross section of the sheet can have the shape of e.g. a rectangle or a triangle.

The backing foil is also optional, at least in many cases.

## Claims

1. Method for producing panels clad with a top layer (2) in a production line comprising different processing stations, where said panels consist of a sheet (3) and at least one fitting (4), characterised in that said method comprises at least the following two successive steps:
- attaching at least one fitting (4) to said sheet (3), and then
- applying and attaching the top layer (2) against the panel in more or less one single operation, so that the top layer (2) covers the sheet (3) and at least one fitting (4).

2. Method according to claim 1, characterised in that the sheet (3) is provided with all the necessary fittings (4) and that said fittings (4) are preferably shaped before the top layer (2) being applied.

3. Method according to claim 1 or 2, characterised in that said top layer (2) is supplied fully automatically from a magazine device (G3).

4. Method according to one of the foregoing claims 1 to 3, characterised in that the sheet (3) and/or the top layer (2) are provided with a means of attachment.

5. Method according to claim 4, characterised in that the top layer (2) is joined to the sheet (3) by means of adhesive.

6. Method according to one of the foregoing claims 1 to 5, characterised in that the top layer (2) is softened to permit bending and attachment against the fittings (4) previously applied against the sheet (3).

7. Method according to claim 6, characterised in that the top layer (2) is softened by means of heat.

8. Method according to one of claims 3 to 7, characterised in that supply of the top layer (2) and the sheet (3) are synchronised.

9. Method according to claim 8, characterised in that the top layer (2) and sheet (3) are joined to each other by means of pressure while both are subjected to a continuous, synchronised movement.

10. Method according to claim 7 or 8, characterised in that the top layer (2) and the sheet (3) are joined to each other by means of pressure rollers or other rollers.

11. Method according to one of the foregoing claims 1 to 10, characterised in that the fittings (4) are supplied fully automatically with a speed that is synchronised with the speed of the processing stations.

12. Production line for carrying out the method according to one of claims 1 to 11, comprising the following devices through which the sheets go one after the other:
- a device (D2) for fastening fittings (4) to a sheet (3) and shaping said sheet and the fittings (4), said fittings (4) being supplied automatically;
- a magazine device (G3) for supplying a top layer (2) fully automatically, the supply of the top layer being synchronised with the supply of the sheet which is already fitted with a fitting;
- a device (G1, G4) for applying an attachment layer to the sheet and/or top layer;
- a device for softening the top layer to enable it to be bent;
- a device (G5) joining the top layer (2) and the sheet (3) with at least one fitting (4) in a single movement.

13. Production line according to claim 12, in which the device for applying the means of attachment is an apparatus for applying adhesive.

14. Production line according to one of claims 11 or 12, in which the device for making bendable is a heat source.
